# EUROPEAN PATENT SPECIFICATION

(11) **EP 1 701 999 B1**
(45) Date of publication and mention of the grant of the patent: **25.02.2009**
(21) Application number: 04808772.0
(22) Date of filing: 09.12.2004
(51) Int. Cl.: C08K 5/098, C08L 67/02, C08L 77/00

(54) **OXYGEN SCAVENGING COMPOSITION**
SAUERSTOFFABFANGZUSAMMENSETZUNG
COMPOSITION DESOXYGENANTE

(30) Priority: 17.12.2003 EP 03078901; 19.07.2004 EP 04077094; 20.07.2004 EP 04077106
(43) Date of publication of application: 20.09.2006
(73) Proprietor: DSM IP Assets B.V., 6411 TE Heerlen (NL)
(72) Inventor: STROEKS, Alexander, Antonius, Marie, NL-6301 HL Valkenburg aan de Geul (NL); GIJSMAN, Pieter, NL-6191 NM Beek (NL)
(74) Representative: Verhaegen, Ilse Maria M.
(86) International application number: PCT/NL2004/000856
(87) International publication number: WO 2005/059020

(56) References cited:
- WO-A-01/10947
- WO-A-99/15433

## Description

The invention relates to an oxygen scavenging composition comprising, a copolymer comprising polypropylene oxide segments and polymer segments and an oxidation catalyst.

Such a composition is known from WO 99/15433. In this document an oxygen scavenging composition is prepared by reactive extrusion of the polymer segments, in particular a polycondensate, and a functionalised polypropylene oxide oligomer. The resulting product, denoted as copolycondensate is applied as such in single layer or multi layer films or is diluted with further polycondensate.

It has appeared that this composition has a restricted efficiency in oxygen scavenging properties, making it necessary to apply thicker layers to obtain a certain degree of active oxygen barrier properties.

WO 01/10947 relates to polyether containing polymers for oxygen scavenging. It is not disclosed to prepare a copolymer by copolymerising the corresponding monomers in the presence of functionalised polypropylene oxide segments.

Aim of the invention is a composition comprising a copolymer comprising polypropylene oxide segments and polymer that shows better active oxygen barrier properties than the known composition.

This is achieved according to the invention in that the copolymer has been prepared by copolymerising the corresponding monomers in the presence of functionalised polypropylene oxide segments.

Surprisingly it has appeared that the fact that the polymer segments have been formed from copolymerisation of the corresponding monomers with functionalised polypropylene oxide segments rather than having these functionalised polypropylene oxide segments react with already polymerised polymer segments causes a considerable difference in oxygen scavenging properties of the composition.

The composition according to the invention shows highly advantageous active oxygen scavenging properties.

Polycondensates, also known as condensation polymers, among which polyesters and in particular polyamides, form a certain barrier for oxygen and are for this and other reasons applied as films, wraps, bottles, vessels or other containers for feed and foods and drinks. They protect the packed goods from direct contact with the environment, including the oxygen in ambient air. Since layers of these polymers are not completely impermeable to oxygen it is known to mix a compound into the polymer that is able to scavenge oxygen permeating into the polymer layer by a chemical reaction binding the oxygen.

Such compounds are known as active oxygen scavengers. Among these polyalkylene oxides and polydienes have been reported to be examples of active oxygen scavengers. It is also known to apply oxygen scavengers that are reactive with polycondensate and to make the scavenger react with the polycondensate during the mixing, e.g. by reactive extrusion.

Examples of polycondensates are polyesters and polyamides. Examples of suitable polyesters are polyethylene terephtalate (PET), polybutylene terephtalate (PBT), polyethylene naphtanoate (PEN), polybutylene naphtanoate (PBN). Examples of suitable polyamides (PA) are aliphatic polyamides, that may eventually be branched polyamides, such as PA6, PA4,6, PA6,6, PA 11, PA12, semi aromatic polyamides as MXD6, PA6,I/6,T, PA6,6/6,T, fully aromatic polyamides and copolymers and blends of the listed polyamides and polyesters.

As the oxygen scavenging compound in the composition according to the invention a copolymer comprising functionalised polypropylene oxide (PPO) segments and polymer segments is used, that has been prepared by polymerising the corresponding monomers of the polymer in the presence of polypropylene oxide segments. This is different than the copolymers known from the prior art that are obtained by reactive extrusion of functionalised PPO oligomer segments and preformed polymer segments of certain length or molecular weight. In the production process known from WO 99/15433 the PPO oligomer segments usually are functionalized with end groups that can react with reactive sites of the polymer. Examples of such functional end groups and reactive polymer sites are e.g. known from WO 99/15433. The same functionality may have been applied in the copolymerisation process of the copolymer applied in the present invention.

Suitable PPO segments are linear oligomers of PPO and are preferably of the substituted type. In IUPAC nomenclature this PPO is denoted as polypropylene glycol (polyoxy-1,2-propanediyl). They consist of 2 to 5000 polypropylene oxide monomer units, preferably of 10 to 2500 units and in this shape and size they have been copolymerised with the monomers. In this range an even distribution of the copolymers in the polycondensate appears to be achieved. During this copolymerisation copolymers of the -ABABA- type are formed comprising polymer segments A of variable length alternated with propylene oxide segments B.

In another embodiment the PPO segments are present as branches in a two, three, four or higher star branched compound the centre unit of which can be e.g. a di-, tri-, tetra or higher functional ester, amide, ether, urethane. In the process of preparation of the copolymer applied in the composition of the invention, the polymer segments then grow from the free ends of the PPO segment branches. During this copolymerisation linear copolymers can be formed of the type ABA or branched copolymers having branches of the type BA.

Apart from the PPO segments also other ether segments optionally may be present as e.g. polyethylene oxide, however in smaller amounts than the PPO. Preferably the other ether segments are present in amounts less than 40 wt%, more preferably less than 30 wt% or less than 10 wt% of the amount of PPO.

Suitable polymer segments in the copolymers that have been formed by copolymerising the corresponding monomers in the presence of the PPO segments are those that form the building monomers for the polycondensates described above, in particular polyesters and aliphatic polyamides, preferably PA6 or PA6,6.

These copolymers can be formed by reacting the functionalised PPO in the presence of the monomers at conditions well known for the polymerisation of the corresponding monomers or according to US 4590243 and EP 0067695.

In these processes, apart from the monomers and the PPO segments, also other compounds can be present, for example catalysts, chain stoppers, stabilisers and the like. Linear PPO segments are introduced in these reactions as divalent moieties that are functionally terminated at their ends, e.g. with hydroxy, amino or acid or other groups that are capable reacting with the monomers the polymer part is polymerised from. In star branched type PPO segments the free ends, i.e. those ends of the PPO part of the PPO segment that are not bound to the centre moiety of the star, are functionalised with the groups mentioned above.

In copolymers that can be applied in the composition according to the invention the relative amount of the PPO can be within the range of 0.5 to 40 wt%, preferably of 1 to 30 wt%. Lower amounts will diminish in particular the period during which the oxygen scavenging properties will remain at a high level. Higher amounts may lead to the formation of a co-continuous phase of PPO segments in the composition. This is detrimental for the total oxygen barrier capacity of the composition and therefore the amount of PPO in the composition should be taken so that the PPO forms a disperse phase in the composition

The oxygen scavenging PPO segments are advantageously present in the composition as small conglomerates in the composition. These conglomerates may be spherical and having a size, i.e. a diameter or a smallest axis, an axis being defined as a line connecting two diametrically located points on the surface of the conglomerate, of up to 500 nm and preferably at most 30 or more preferably at most 25% of the conglomerates have a diameter or smallest axis above 500 nm. Spherical is to be understood as having the same or nearly the same dimension in the three spatial directions, deviating from a spherical shape to such extent only that the length of an axis, is at most 1.3 times the length of the diameter of a sphere having the same volume. Preferably at least 50% of the conglomerates have a size of at most 300 nm and preferably of at most 200 nm. More preferably at least 70, 90 or even 99 % of the conglomerates is within the specified ranges. A lower conglomerate size has appeared to lead to better oxygen barrier properties.

It was further found that an object, comprising a layer of the composition according to the invention, shows enhanced oxygen scavenging performance when a majority of the conglomerates in their shapes have an aspect ratio and in majority are oriented. Such conglomerates can have an elongated or flattened shape, like a cigar or pancake shape. A conglomerate having an aspect ratio is characterized by the feature that its dimension in at least one spatial direction is larger than its dimension in at least one other spatial direction. The ratio between said dimensions preferably is at least 1.3 and more preferably at least 2 or even 5 or even 50 or more than 100. This is contrast to conglomerates that have essentially the same dimension in the three spatial directions. Oriented here means that the largest dimension extends in a spatial direction parallel to a surface of the object that is exposed to oxygen to be scavenged. This largest dimension of the conglomerate in said parallel direction may be larger than 500 nm, even up to some millimetres. However, the dimension of the conglomerate perpendicular to said surface preferably is below 400 nm and more preferably below 350 nm. This appears to enhance the transparency of the oxygen-scavenging layer in the object significantly. An object containing conglomerates having an aspect ratio can be obtained by subjecting the object during or after it being manufactured to an orientating step, e.g. by exposing it to shear in a molten state, by pressing and in particular by drawing in one or more directions.

The invention thus also relates to an object, having at least one surface that is to be exposed to an oxygen containing environment, and comprising a layer containing the composition according to the invention in which conglomerates of the PPO segments are present, of which conglomerates at least 50 %, preferably at least 70 % and more preferably at least 90 % have a dimension in at least one spatial direction that is larger than a dimension in at least one other spatial direction by a factor of at least 1.3, and in which said larger dimension extends in a spatial direction parallel to the at least one surface of the object.

The composition according to the invention further comprises an oxidation catalyst, promoting the oxygen scavenging activity of the oxygen scavenging compound.

Suitable oxidation catalysts include transition metal catalysts, which can readily switch between at least two oxidation states. Preferably, the transition metal is in the form of a transition metal salt or transition metal complex, wherein the metal is selected from the groups 4, 5, 6, 7, 8, 9, 10, 11 and 12 of the periodic system of the elements. Suitable metals include Manganese II or III, Iron II or III, Chromium II or III, Cobalt II or III, Copper I or II, Nickel II or III, Rhodium II, or II or IV and Ruthenium I, II or IV, Titanium III or IV, Vanadium III, IV or V.

Preferably Co II or III is used as the metal part in the catalyst.

Suitable counterions for the metal include, but are not limited to, chloride, acetate, acetylacetonate, stearate, propionate, palmitate, 2-ethylhexanoate, neodecanoate or naphtenate. The metal may also be an ionomer, in which case a polymeric counter ion is employed. Such ionomers are well known in the art. As an example of a suitable complexing moiety phthalocyanine is mentioned. The transition metal compounds may be present between 10ppm and 10wt%.

Preferably the amount of transition metal compound in the composition is between 50 and 5000 wt.ppm.

Further the composition according to the invention may comprise other usual additives that may give a certain additionally required property to the composition, examples of which are fibres, fillers, nano-particles, antioxidants, flame retardants, mould release agents and other compounds known in the art for this purpose.

The composition according to the invention has excellent oxygen barrier properties, e.g. it has on oxygen barrier lower than 0.3 preferably lower than 0.1 cc.mm/(m².day.atm) when measured according to ASTM standard D3985 under dry conditions on a film having a thickness of 60 µm.

The composition of the invention can be applied as a layer in multilayer films, preferably as an inner layer, sandwiched between other layers. In such a sandwich construction the active lifetime and effectiveness of the composition is considerably enhanced in comparison with a layer that is directly exposed to the environment. Further applications are layers in the wall of bottles, vessels or other containers, in particular those applied for packaging of foods or other substances that degrade in quality under the influence of oxygen. The invention thus further relates to the use of the composition according to the invention for the applications mentioned. Suitable methods for this are known per se and are the commonly used shaping and manufacturing techniques for polymer materials.

The oxygen scavenging composition comprising the copolymer and an oxidation catalyst can be prepared by mixing the copolymer with the oxidation catalyst in a separate step or in a step of manufacturing an object from the composition according to the invention.

This mixing can be conducted in the equipment known in the art for mixing thermoplastic polymers such as extruders and mixers. The process applies melt-mixing, i.e. the mixing takes place above the melting point of the oxygen scavenging copolymer but below its decomposition temperature.

The invention will be elucidated by the following examples without being restricted thereto.

### Experiment 1: Preparation of oxygen scavenging copolymers

### Preparation of copolymer 1

A flask equipped with stirrer, thermocouple and nitrogen inlet was charged with caprolactam (88.8 wt%) and a PPO-containing oligomer (Brüggemann P1-30, polypropyleneglycol ester acyl caprolactam) (11.2 wt%). This mixture was diluted in a 1:1 fashion with a catalyst solution (Bruggemann C1, 12% caprolactam magnesium bromide in caprolactam). After mixing at 100°C the resulting mixture was poured in a mould and kept for 5 minutes at 145°C. The solid co-polyamide, containing 5 wt% polypropylene glycol, was removed from the mould and ground.

### Preparation of copolymers 2

A flask equipped with stirrer, thermocouple and nitrogen inlet was charged with caprolactam (55.6 wt%) and a PPO-containing oligomer (Brüggemann P1-30, polypropyleneglycol ester acyl caprolactam) (44.4 wt%). This mixture was diluted in a 1:1 fashion with a catalyst solution (Brüggemann C1, 12% caprolactam magnesium bromide in caprolactam). After mixing at 100°C the resulting mixture was poured in a mould and kept for 5 minutes at 145°C. The solid co-polyamide, containing 20 wt% polypropylene glycol, was removed from the mould and ground.

### Preparation of copolymer 3 (Comparative)

A flask equipped with stirrer, thermocouple and nitrogen inlet was charged with caprolactam (29.9 wt%) and a PPO-containing oligomer (Brüggemann P1-30, polypropyleneglycol ester acyl caprolactam) (70.1 wt%). This mixture was diluted in a 2:1 fashion with a catalyst solution (Brüggemann C1, 15% caprolactam magnesium bromide in caprolactam). After mixing at 100°C the resulting mixture was poured in a mould and kept for 5 minutes at 145°C. The solid co-polyamide, containing 42 wt% polypropylene glycol, was removed from the mould and ground.

### Preparation of copolymer 4

A 2 L reactor equipped with distillation column and stirrer was charged with 790 g dimethylterephthalate, 560 g 1,4-butane diol, 100 g poly(ethyleneoxide-propyleneoxide-ethyleneoxide), 250 mg of titanium tetrabutoxide and 150 mg of magnesium acetate tetrahydrate. After 3 times having flushed the reactor with nitrogen, the reactor content was heated under stirring and atmospheric pressure gradually within one hour to a temperature of 150°C, kept at this temperature for half an hour, and subsequently further heated within 2 hours to a temperature of 220°C. The thus obtained transesterified product was then further polymerised at 240°C under vacuum (down to 2 mbar) for 150 minutes at a stirring speed of 20 RPM. The polymerised product was released from the reactor, under nitrogen pressure, in the form of a strand, cooled in water and granulated in a pelletiser.

### Preparation of copolymer 5 (Comparative)

A 2 L reactor equipped with distillation column and stirrer was charged with 800 g dimethylterephthalate, 495 g 1,4-butane diol, 100 g poly(tetrahydrofuran-1000), 480 mg of titanium tetrabutoxide and 300 mg of magnesium acetate tetrahydrate. After 3 times having flushed the reactor with nitrogen, the reactor content was heated under stirring and atmospheric pressure gradually within one hour to a temperature of 150°C, kept at this temperature for half an hour, and subsequently further heated within 2 hours to a temperature of 220°C. The thus obtained transesterified product was then further polymerised at 240°C under vacuum (down to 2 mbar) for 150 minutes at a stirring speed of 20 RPM. The polymerised product was released from the reactor, under nitrogen pressure, in the form of a strand, cooled in water and granulated in a pelletiser.

### Experiment 2: Preparation of oxygen scavenging samples

Copolymers 1, 2, 3, 4 and 5 were melt-mixed with the oxidation catalyst cobalt acetate. The mixing was carried out at a barrel temperature of 260°C, a rotation speed of 120 rpm and a residence time of 3 minutes. All experiments were carried out under nitrogen atmosphere. The copolymers were dried before processing. The materials prepared were stored in sealed bags after processing. Information regarding these samples is given in Table 1.

For comparison, samples C1 and C2 based on a functionalised PPO oligomer (Jeffamine D-2000 of Huntsman) and polyamide 6 (DSM Akulon F132-E, viscosity number 210 ml/g ISO 307, Relative Viscosity measured in 90% formic acid at 30 °C: 3.20) have been prepared by a reactive extrusion process on the lab-scale twinscrew extruder with residence times of 3 and 5 minutes.

Also a polyamide 6 reference not containing an oxygen scavenging compound was prepared (sample D) serving as a reference for samples 1, 2, A, C1 and C2.

Also a poly butylene terephtalate (DSM Arnite T04 200, Relative Viscosity measured of a 1 wt% solution in m-cresol at 25°C: 1.85) reference sample not containing an oxygen scavenging compound was prepared (sample E) serving as a reference for samples 3 and B, see table 1.

**Table 1**

| Sample | Oxygen scavenging compound | PPO content (wt%) | Co(Ac)₂ content (ppm) |
|---|---|---|---|
| 1 | Copolymer 1 | 5 | 1000 |
| 2 | Copolymer 2 | 20 | 1000 |
| A | Copolymer 3 | 42 | 1000 |
| 3 | Copolymer 4 | 6.8 | 1000 |
| B | Copolymer 5 | 10 | 1000 |
| C1 | Jeffamine* D-2000 | 4.8 | 1000 |
| C2** | Jeffamine* D-2000 | 4.8 | 1000 |
| D | None | 0 | 1000 |
| E | None | 0 | 1000 |

| | | | |
|---|---|---|---|
| * Amine end-capped PPO of Huntsman **: residence time 5 minutes | | | |

### Experiment 3: Preparation of oxygen scavenging films

All samples were ground under cryogenic conditions. The resulting powders were pressed between flat hot plates into films with a thickness in the range 55-75 micrometer. The dimensions of the film were 13*13 cm². Pressing conditions were: plates temperature: 260°C, time between plates without pressure: 5 min, subsequently pressurizing the system for 3 minutes at 10kN.

### Experiment 4: Measuring of oxygen permeability of films

The oxygen permeability of the prepared films was measured by a MOCON OX-TRAN 2/21 permeameter according to ASTM D3985 by exposing the films to a nitrogen environment on one side and an oxygen atmosphere at the other side of the films leading to an oxygen partial pressure difference over the films of 1 bar. The permeability tests were conducted under dry conditions at room temperature (23°C). The measurements were performed after 50 hours conditioning at the measurement conditions.

In Table 2 the oxygen permeability is presented for the various films. The oxygen permeability is normalised with respect to film thickness.

**Table 2**

| Sample | Oxygen permeability (cc mm/(m2 day atm) |
|---|---|
| 1 | 0.0 |
| 2 | 0.0 |
| A | 87.34 |
| 3 | < 0.2 |
| B | 4.55 |
| C1 | 0.46 |
| C2** | 0.47 |
| D | 1.03 |
| E | 14.92 |

The detection limit of the Oxtran permeameter is 5*10⁻³ cc/(m2.day. atm). For the given thickness range of the samples, this leads to an intrinsic permeability limit of about 4*10⁻⁴ cc.mm/(m².day.atm). The intrinsic oxygen permeability of samples 1 and 2 is smaller than 4*10⁻⁴ cc.mm/(m².day.atm).

A comparison of the oxygen barrier results of the polyamide based oxygen scavenging samples (samples 1, 2, A, C1, C2) and the correspondent reference sample D learns that samples according to the invention, i.e. samples 1 and 2, have oxygen permeability values smaller than 4*10⁻⁴ cc.mm/(m².day.atm) for compositions containing 1000 ppm of oxidation catalyst. These values are much lower than the value for Comparative samples A1 and A2, which were prepared according to the process disclosed in WO 99/15433. The values are also much lower compared to reference sample D. In the case of sample A, the oxygen barrier performance is rather poor due, most probably to the fact that the ether phase becomes co-continuous. In the case of samples 1 and 2 the ether phase is of a disperse nature.

A comparison of the oxygen barrier results of the polyester based oxygen scavenging samples (samples 4, 5) and the correspondent reference sample C learns that the sample according to the invention, i.e. sample 4, has an oxygen permeability values smaller than 0.2 cc.mm/(m².day.atm) for compositions containing 1000 ppm of oxidation catalyst. This value is much lower than the value for sample B containing a tetrahydrofuran based ether system instead of a PPO based ether system proving PPO is superior with respect to oxygen scavenging capability compared to this other ether. The value is also much lower than reference sample E containing no oxygen scavenging component.

## Claims

1. Oxygen scavenging composition comprising a copolymer comprising polypropylene oxide segments and polymer segments and an oxidation catalyst, **characterized in that** the copolymer has been prepared by copolymerising the corresponding monomers in the presence of functionalised polypropylene oxide segments.

2. Oxygen scavenging composition according to claim 1, wherein the polymer segments are polyamide or polyester.

3. Oxygen scavenging composition according to claim 1 or 2, wherein the amount of polypropylene oxide segments is from 0.5 to 40 wt% with respect to the composition.

4. Oxygen scavenging composition according to claim 3, wherein said amount is in the range from 1 to 30 wt%.

5. Oxygen scavenging composition according to any of claims 1 - 4, wherein the polycondensate is absent and wherein the polypropylene oxide segments are present as spherical conglomerates and at most 25% of the conglomerates have a size above 300 nm

6. Oxygen scavenging composition according to any of claims 1 to 5, wherein the oxidation catalyst is a transition metal salt or complex.

7. Oxygen scavenging composition according to any of claim 1 - 6, having an oxygen barrier lower than 0.3 cc.mm/(m².day.atm) when measured according to ASTM standard D3985 under dry conditions on a film having a thickness of 60 µm.

8. Oxygen scavenging composition according to claim 7, having an oxygen barrier lower than 0.1 cc.mm/(m²*day*atm) when measured according to ASTM standard D3985 under dry conditions on a film having a thickness of 60 µm.

9. Use of the oxygen scavenging composition according to any of claims 1 to 8 for the manufacture of an oxygen-scavenging object.

10. Use according to claim 9, wherein the object is a container for food, drink or feed packaging such as a film, a bottle, a vessel or a wrap.

11. Use according to claim 10, wherein the object is a multilayer object in which a layer of the oxygen scavenging composition is sandwiched between two layers of another material.

12. Object, having at least one surface that is to be exposed to an oxygen containing environment, and comprising a layer containing the composition according to any of claims 1 to 8, in which conglomerates of the polypropylene oxide segments are present, of which conglomerates at least 90% has a dimension in at least one spatial direction that is larger than a dimension in at least one other spatial direction by a factor of at least 1.3, and in which said larger dimension extends in a direction parallel to the at least one surface.

13. Object according to claim 12, wherein the dimension of at most 25% of the conglomerates in a direction perpendicular to the at least one surface is less than 350 nm.

14. Object according to claim 13, wherein the object is a container for food, drink or feed packaging such as a film, a bottle, a vessel or a wrap.

15. Object according to claim 13, wherein the object is a multilayer object in which a layer of the oxygen scavenging composition is sandwiched between two layers of another material.

## Patentansprüche

1. Sauerstoffabfangzusammensetzung, enthaltend ein Copolymer mit Polypropylenoxid-Segmenten und Polymersegmenten und einen Oxidationskatalysator, **dadurch gekennzeichnet, daß** das Copolymer durch Copolymerisation der entsprechenden Monomere in Gegenwart von funktionalisierten Polypropylenoxid-Segmenten hergestellt worden ist.

2. Sauerstoffabfangzusammensetzung nach Anspruch 1, worin es sich bei den Polymersegmenten um Polyamid oder Polyester handelt.

3. Sauerstoffabfangzusammensetzung nach Anspruch 1 oder 2, worin die Menge an Polypropylenoxid-Segmenten 0,5 bis 40 Gew.-%, bezogen auf die Zusammensetzung, beträgt.

4. Sauerstoffabfangzusammensetzung nach Anspruch 3, worin die Menge im Bereich von 1 bis 30 Gew.-% liegt.

5. Sauerstoffabfangzusammensetzung nach einem der Ansprüche 1 - 4, worin das Polykondensat fehlt und die Polypropylenoxid-Segmente in Form von kugelförmigen Konglomeraten vorliegen und höchstens 25% der Konglomerate eine Größe über 300 nm aufweisen.

6. Sauerstoffabfangzusammensetzung nach einem der Ansprüche 1 - 5, worin es sich bei dem Oxidationskatalysator um ein Übergangsmetallsalz oder einen Übergangsmetallkomplex handelt.

7. Sauerstoffabfangzusammensetzung nach einem der Ansprüche 1 - 6 mit einer Sauerstoffbarriere von weniger als 0,3 cc.mm/m².day.atm) bei Messung gemäß ASTM-Norm D3985 unter trockenen Bedingungen an einem Film mit einer Dicke von 60 µm.

8. Sauerstoffabfangzusammensetzung nach Anspruch 7 mit einer Sauerstoffbarriere von weniger als 0,1 cc.mm/m².day.atm) bei Messung gemäß ASTM-Norm D3985 unter trockenen Bedingungen an einem Film mit einer Dicke von 60 µm.

9. Verwendung der Sauerstoffabfangzusammensetzung nach einem der Ansprüche 1 bis 8 zur Herstellung eines sauerstoffabfangenden Gegenstands.

10. Verwendung nach Anspruch 9, bei der es sich bei dem Gegenstand um einen Behälter zur Verpackung von Lebensmitteln, Getränken oder Essen Verpackung wie einen Film, eine Flasche, ein Gefäß oder eine Hülle handelt.

11. Verwendung nach Anspruch 10, bei der es sich bei dem Gegenstand um einen mehrschichtigen Gegenstand handelt, in dem eine Schicht der Sauerstoffabfangzusammenstezung sandwichartig zwischen zwei Schichten aus einem anderen Material angeordnet ist.

12. Gegenstand, der mit mindestens eine Oberfläche, die einer sauerstoffhaltigen Umgebung auszusetzen ist, aufweist und eine Schicht, die die Zusammensetzung nach einem der Ansprüche 1 bis 8 enthält, in der Konglomerate der Polypropylenoxid-Segmente vorliegen, wobei mindestens 90% der Konglomerate eine Abmessung in mindestens einer Raumrichtung aufweisen, die um einen Faktor von mindestens 1,3 größer ist als die Abmessung in mindestens einer anderen Raumrichtung, und worin die größere Abmessung sich in einer zu der mindestens einen Oberfläche parallelen Richtung erstreckt.

13. Gegenstand nach Anspruch 12, bei dem die Abmessung von mindestens 25% der Konglomerate in einer zu der mindestens einen Oberfläche senkrechten Richtung weniger als 350 nm beträgt.

14. Gegenstand nach Anspruch 13, bei dem es sich um einen Behälter zur Verpackung von Lebensmitteln, Getränken oder Essen Verpackung wie einen Film, eine Flasche, ein Gefäß oder eine Hülle handelt.

15. Gegenstand nach Anspruch 13, bei dem es sich um einen mehrschichtigen Gegenstand handelt, in dem eine Schicht der Sauerstoffabfangzusammensetzung sandwichartig zwischen zwei Schichten aus einem anderen Material angeordnet ist.

## Revendications

1. Composition piégeuse d'oxygène, comprenant un copolymère comprenant des segments d'oxyde de polypropylène et des segments de polymère et un catalyseur d'oxydation, **caractérisée en ce que** le copolymère a été préparé par copolymérisation des monomères correspondants en présence de segments d'oxyde de polypropylène fonctionnalisés.

2. Composition piégeuse d'oxygène selon la revendication 1, **caractérisée en ce que** les segments de polymère sont le polyamide ou le polyester.

3. Composition piégeuse d'oxygène selon la revendication 1 ou 2, **caractérisée en ce que** la quantité de segments d'oxyde de polypropylène est de 0,5 à 40 % en poids par rapport à la composition.

4. Composition piégeuse d'oxygène selon la revendication 3, **caractérisée en ce que** ladite quantité est dans la gamme de 1 à 30 % en poids.

5. Composition piégeuse d'oxygène selon l'une quelconque des revendications 1 à 4, **caractérisée en ce que** le polycondensat est absent et **en ce que** les segments d'oxyde de polypropylène sont présents sous forme de conglomérats sphériques et au plus 25 % des conglomérats ont une taille supérieure à 300 nm.

6. Composition piégeuse d'oxygène selon l'une quelconque des revendications 1 à 5, **caractérisée en ce que** le catalyseur d'oxydation est un sel ou un complexe de métal de transition.

7. Composition piégeuse d'oxygène selon l'une quelconque des revendications 1 - 6, ayant une barrière d'oxygène inférieure à 0,3 cc.mm/(m².jour.atm) lorsqu'elle est mesurée selon la norme ASTM D3985 dans des conditions sèches sur un film ayant une épaisseur de 60 µm.

8. Composition piégeuse d'oxygène selon la revendication 7, ayant une barrière d'oxygène inférieure à 0,1 cc.mm/(m².jour.atm) lorsqu'elle est mesurée selon la norme ASTM D3985 dans des conditions sèches sur un film ayant une épaisseur de 60 µm.

9. Utilisation d'une composition piégeuse d'oxygène selon l'une quelconque des revendications 1 à 8, pour la fabrication d'un objet piégeur d'oxygène.

10. Utilisation selon la revendication 9, **caractérisée en ce que** l'objet est un conteneur pour le conditionnement de l'alimentation humaine, des boissons ou de l'alimentation emballage tel qu'un film, une bouteille, un récipient ou un emballage.

11. Utilisation selon la revendication 10, **caractérisée en ce que** l'objet est un objet multicouche dans lequel une couche de la composition piégeuse d'oxygène est en sandwich entre deux couches d'une autre matière.

12. Objet ayant au moins une surface qui est exposée à un environnement contenant de l'oxygène, et comprenant une couche contenant la composition selon l'une quelconque des revendication 1 à 8, dans lequel des conglomérats des segments d'oxyde de polypropylène sont présents, au moins 90 % desdits conglomérats ont une dimension dans au moins une direction spatiale qui est supérieure à une dimension dans au moins une autre direction spatiale d'un facteur d'au moins 1,3, et dans lesquels ladite plus grande dimension s'étend dans une direction parallèle à ladite au moins une surface.

13. Objet selon la revendication 12, **caractérisé en ce que** la dimension d'au plus 25 % des conglomérats dans une direction perpendiculaire à ladite au moins une surface est inférieure à 350 nm.

14. Objet selon la revendication 13, **caractérisé en ce que** l'objet est un conteneur pour le conditionnement de l'alimentation humaine, des boissons ou de l'alimentation emballage tel qu'un film, une bouteille, un récipient ou un emballage.

15. Objet selon la revendication 13, **caractérisé en ce que** l'objet est un objet multicouche dans lequel une couche de la composition piégeuse d'oxygène est en sandwich entre deux couches d'une autre matière.
